# EUROPÄISCHE PATENTSCHRIFT

(11) **EP 0 693 721 B1**
(45) Veröffentlichungstag und Bekanntmachung des Hinweises auf die Patenterteilung: **27.10.1999**
(21) Anmeldenummer: 95111034.5
(22) Anmeldetag: 14.07.1995
(51) Int. Cl.: G05D 11/13, B41F 33/00

(54) **Vorrichtung und Verfahren zur Messung und Konstanthaltung des prozentualen Anteils eines flüssigen Bestandteils**
Method and apparatus for measuring and stabilizing the proportional part of a liquid component
Méthode et appareil pour mesurer et stabiliser la partie proportionnelle d'un composant liquide

(30) Priorität: 22.07.1994 DE 4426078
(43) Veröffentlichungstag der Anmeldung: 24.01.1996
(73) Patentinhaber: Baldwin Grafotec GmbH, 86165 Augsburg (DE)
(72) Erfinder: Lagger, Jürgen, D-86169 Augsburg (DE)
(74) Vertreter: Vetter, Ewald Otto, Dipl.-Ing.

(56) Entgegenhaltungen:
- EP-A- 0 158 142
- US-A- 3 557 817
- US-A- 5 201 337

## Beschreibung

Die Erfindung betrifft eine Vorrichtung und ein Verfahren zur Messung und Konstanthaltung des prozentualen Anteils eines flüchtigen Bestandteils eines Flüssigkeitsgemisches, insbesondere in einer Druckmaschine, gemäß dem Oberbegriff von Anspruch 1.

Eine Vorrichtung dieser Art ist aus der EP-B1-0 158 142 bekannt. Im Offsetdruckverfahren werden die nichtdruckenden Stellen der Druckplatte eines Druckplattenzylinders mit einem sogenannten Feuchtwasser oder Wischwasser befeuchtet, welches zusätzlich zu Wasser besondere Zusatzstoffe und Alkohol oder einen Alkoholersatzstoff enthält. Es ist erwünscht, das Mischungsverhältnis dieser Komponenten möglichst konstant zu halten. Der Alkohol oder Alkoholersatzstoff verdunstet relativ schnell und der verdunstete Teil muß kontinuierlich ersetzt werden. Die bekannte Vorrichtung dient demgemäß zur Bestimmung und Konstanthaltung des Mischungsverhältnisses einer Flüssigkeitsmischung, insbesondere zur Bestimmung und Konstanthaltung der Alkoholkonzentration des beim Offsetdruckverfahren verwendeten Feuchtwassers. Die Vorrichtung enthält ein Gefäß, das mit einem Zulauf und einem Überlauf versehen ist und in einem die Flüssigkeitsmischung als Strömung führenden Flüssigkeitskreislauf angeordnet ist. In den Flüssigkeitskreislauf mündet eine Beimischleitung für den Alkohol mit einem kontrollierten Ventil, das in Abhängigkeit von der Eintauchtiefe eines Schwimmkörpers in der Flüssigkeitsmischung im Gefäß betätigt wird. Das Wasser als Hauptbestandteil und die Zusatzstoffe der Flüssigkeitsmischung haben unterschiedliche Dichten. Dadurch können sich Meßfehler ergeben, wenn die Dichte der Flüssigkeitsmischung als Maß für ihren prozentualen Alkoholgehalt gemessen wird. Für die Bedienungsperson einer Druckmaschine ist es jedoch wichtig zu wissen, wieviel Alkohol im Feuchtwasser enthalten ist. Bei der Konstanthaltung des Alkoholgehaltes im niedrigen Alkohol-Anteilsbereich gibt es große Probleme, den Alkoholgehalt genau zu messen und genau konstant zu halten. Nur wenn die Vorrichtung erst dann auf einen Bezugswert von z.B. "Null" abgeglichen wird, nachdem das Feuchtwasser alle Zusatzstoffe erhalten hat und die beim Betrieb der Druckmaschine übliche Betriebstemperatur erreicht hat, kann man davon ausgehen, daß ein gemessener Alkoholgehalt stimmt. Die momentan auf dem Markt befindlichen elektronischen Systeme zur direkten Alkoholmessung, anstelle der indirekten Messung durch Messung der Dichte des Flüssigkeitsgemisches, sind sehr aufwendig und teuer.

Durch die Erfindung soll die Aufgabe gelöst werden, ein preisgünstiges und von einer Bedienungsperson leicht bedienbares Meß- und Nachdosierprinzip für Alkohol oder andere flüchtige Bestandteile zu schaffen.

Diese Aufgabe wird gemäß der Erfindung durch die kennzeichnenden Merkmale von Anspruch 1 und dem unabhängigen Verfahrensanspruch gelöst.

Weitere Merkmale der Erfindung sind in den abhängigen Ansprüchen enthalten.

Die Erfindung hat im wesentlichen folgende Vorteile: preisgünstige und robuste Vorrichtung; auch bei kleinem Alkoholgehalt ist eine brauchbar genaue Messung und Nachdosierung von Alkohol möglich; die Vorrichtung kann von jeder Bedienungsperson einer Druckmaschine leicht geeicht (auf einen Bezugswert eingestellt) und benutzt werden.

Die Erfindung beruht auf dem Dichte-Meßprinzip und funktioniert im wesentlichen wie folgt:
1. Abgleich (Eichen) der Vorrichtung: Bei der ersten Befüllung des Flüssigkeitskreislaufes, beispielsweise der Kreislauf eines Gerätes zur Aufbereitung und Kühlung von Feuchtwasser, werden die gewünschten Zusatzstoffe dem Flüssigkeitsgemisch beigefügt. Nach der Erstbefüllung des Flüssigkeitskreislaufes und Abkühlung des Systems auf die Betriebstemperatur wird am elektronischen Meßgerät häufig eine Abweichung vom Alkoholwert "Null" festgestellt, weil die Zusatzstoffe die Dichte des Flüssigkeitsgemisches verändert haben. Deshalb muß die Vorrichtung abgeglichen (neu eingestellt) werden, nachdem die Zusatzstoffe dem Flüssigkeitsgemisch hinzugefügt wurden und sie Betriebstemperatur hat. Der Abgleich der Vorrichtung auf einen Bezugswert, von welchem aus ein bestimmter Soll-Wert des flüchtigen Bestandteils, beispielsweise Alkohol oder ein Alkoholersatzstoff, erreicht werden soll, erfolgt gemäß der Erfindung dadurch, daß das Flüssigkeitsniveau und damit die Schwimmhöhe eines Schwimmerkörpers im Behälter mittels eines höhenveränderbaren Überlaufrohres so verändert wird, daß das Meßgerät den Bezugswert, z.B. "Null", für den prozentualen Anteil des flüchtigen Bestandteils anzeigt. Damit ist die Vorrichtung bezüglich des hinzuzufügenden Anteils des flüchtigen Bestandteils abgeglichen. Am elektronischen Meßgerät kann jetzt ein gewünschter Soll-Wert für den Anteil des flüchtigen Bestandteils, z.B. Alkohol oder ein Alkoholersatzstoff, eingegeben werden. Danach dosiert und regelt die Vorrichtung automatisch den gewünschten prozentualen Anteil des flüchtigen Bestandteils. "Anteil" bedeutet die Menge an flüchtigem Bestandteil, die ausgehend vom eingestellten Bezugswert dem Flüssigkeitsgemisch hinzugefügt wird, bis der Sollwert erreicht ist. Wenn das Flüssigkeitsgemisch schon vor dem Einstellen (= Abgleichen = Eichen) des Meßgerätes auf den Bezugswert eine Anfangsmenge Alkohol enthält, dann wird bei dieser Anfangsmenge der Bezugswert auf Null eingestellt und anschließend wird die Sollwert-Menge Alkohol hinzugefügt.
2. Temperaturabgleich: Ein Temperaturabgleich wird dadurch durchgeführt, daß der vorgenannte Abgleich auf den Null-Wert erst dann gemacht wird, wenn das Flüssigkeitsgemisch die Betriebstemperatur hat, welche sie auch beim Betrieb beispielsweise in einer Druckmaschine erreicht.

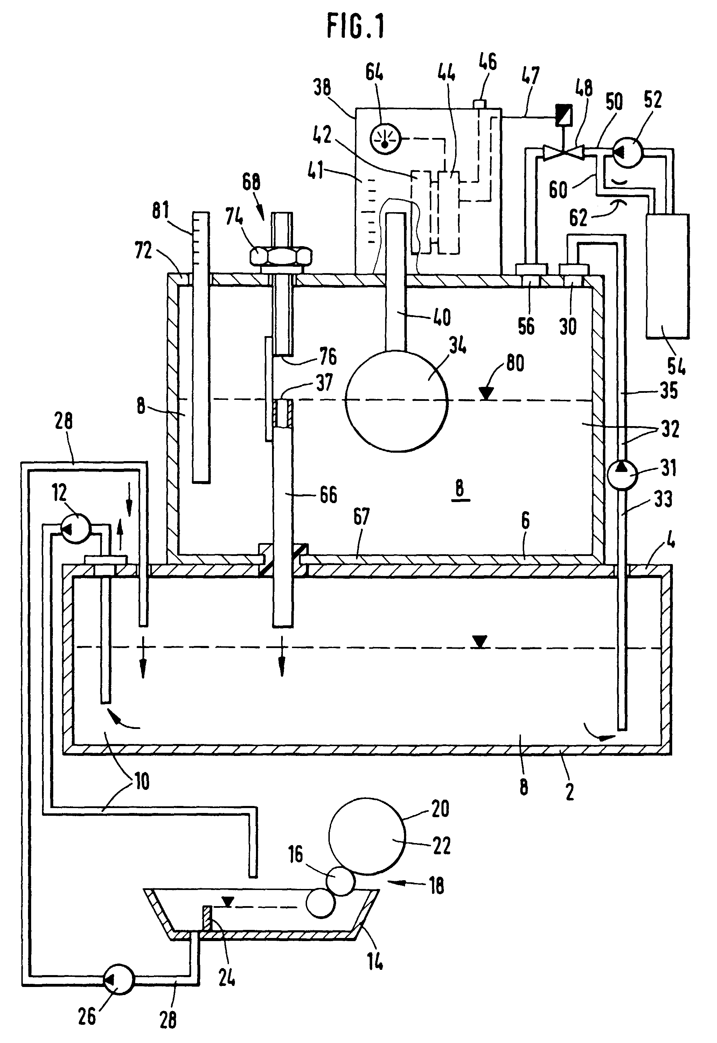

Die Erfindung wird im folgenden mit Bezug auf die Zeichnung anhand einer bevorzugten Ausführungsform als Beispiel beschrieben. In der Zeichnung zeigt
- Fig. 1: eine schematische Darstellung einer Vorrichtung nach der Erfindung.

Die in Fig. 1 dargestellte Vorrichtung enthält einen geschlossenen Aufbereitungsbehälter 2, einen auf oder in seiner Deckwand 4 angeordneten und am Aufbereitungsbehälter 2 befestigten, geschlossenen Meßbehälter 6. Im Aufbereitungsbehälter 2 befindet sich ein Flüssigkeitsgemisch 8 in Form von Feuchtwasser für eine Offsetdruckmaschine. Das Feuchtwasser 8 besteht aus Wasser, einem oder mehreren flüssigen Zusatzstoffen zur antibakteriellen Behandlung und/oder zum Korrosionsschutz und/oder zur Beeinflussung der physikalischen Eigenschaften des Wassers usw., und Alkohol oder Alkoholersatzstoff. Die Zusatzstoffe können flüchtige Stoffe sein, welche verdunsten und deshalb kontinuierlich oder diskontinuierlich ersetzt werden müssen. Im folgenden wird für das beschriebene Beispiel der Alkohol oder Alkoholersatzstoff als "flüchtiger Bestandteil" des Flüssigkeitsgemisches 8 bezeichnet. Sein prozentualer Anteil im Flüssigkeitsgemisch wird gemessen und vorzugsweise automatisch geregelt.

Das Flüssigkeitsgemisch 8 wird in einem ersten Kreislauf 10 mittels einer ersten Pumpe 12 aus dem Aufbereitungsbehälter 2 in eine Feuchtwasserwanne 14 gefördert. Aus der Feuchtwasserwanne 14 wird das Feuchtwasser durch Walzen 16 eines Feuchtwerkes 18 auf die Druckplatte 20 am Umfang eines Druckplattenzylinders 22 übertragen. Das Feuchtwasser 8 wird kontinuierlich mit einer größeren Menge in die Feuchtwasserwanne 14 gefördert als daraus auf den Druckplattenzylinder 22 übertragen wird. Der nicht auf den Druckplattenzylinder 22 übertragene Teil des Feuchtwassers 8 läuft in der Feuchtwasserwanne 14 über einen Überlauf 24 und dann durch Schwerkraft oder eine zweite Pumpe 26 über eine Rücklaufleitung 28 in den Aufbereitungsbehälter 2 zurück.

Die Vorrichtung nach der Erfindung zur Messung und Konstanthaltung des prozentualen Anteils des flüchtigen Bestandteils am Flüssigkeitsgemisch 8 enthält den Meßbehälter 6 und weitere im folgenden beschriebene Teile. Der Meßbehälter 6 ist mit einem Zulauf 30 versehen und in einem die Flüssigkeitsmischung 8 als Strömung führenden zweiten Flüssigkeitskreislauf 32 angeordnet. Der zweite Flüssigkeitskreislauf 32 enthält eine dritte Pumpe 31, welche das Flüssigkeitsgemisch 8 vom Aufbereitungsbehälter 2 durch eine Saugleitung 33 absaugt und über eine Druckleitung 35 in den Meßbehälter 6 fördert, und einen Überlauf 37 im Meßbehälter 6, über welchen das Flüssigkeitsgemisch 8 vom Meßbehälter 6 in den Aufbereitungsbehälter 2 zurückfließt.

In dem Flüssigkeitsgemisch 8 im Meßbehälter 6 schwimmt ein Schwimmkörper 34, welcher in Abhängigkeit von der Dichte des Flüssigkeitsgemisches 8 im Meßbehälter 6 mehr oder weniger tief darin eintaucht.

Auf dem Meßbehälter 6 ist ein elektronisches Meßgerät 38 angeordnet, welches in Abhängigkeit von der Eintauchtiefe des Schwimmkörpers 34 ein Meßsignal erzeugt, welches einem bestimmten Wert der Dichte des Flüssigkeitsgemisches 8 im Meßbehälter 6 und damit einem bestimmten Wert des Anteils des flüchtigen Bestandteils davon entspricht. Der Schwimmkörper 34 hat einen nach oben von ihm wegragenden Meßstab 40, dessen oberes Ende an einer im Meßgerät 38 vorhandenen Meßskala 41 einen bestimmten Meßwert als Meßsignal anzeigt. Ferner erzeugt das obere Ende des Meßstabes 40 in Abhängigkeit von der Höhe des Schwimmkörpers 34 berührungslos ein elektrisches, optisches oder magnetisches Signal in einem optischen, elektrischen oder magnetischen Signalgeber 42 als Ist-Wert für die Höhe des Schwimmkörpers 34 und damit für die Dichte des Flüssigkeitsgemisches 8 im Meßbehälter 6, wobei diese Dichte wiederum einem bestimmten Anteil des flüchtigen Bestandteils im Flüssigkeitsgemisch 8 entspricht. Das Istwert-Signal des Signalgebers 42 erzeugt in einem Computer 44 des Meßgerätes 38 in Abhängigkeit von dem Istwert-Signal und in Abhängigkeit von einem variabel eingebbaren Sollwert eines Sollwerteinganges 46 ein elektrisches Stellsignal auf einer elektrischen Leitung 47 für ein elektromagnetisches Ventil 48. Das Ventil 48 kann ein Auf-Zu-Ventil oder ein Ventil mit einstellbarem Strömungsdurchlaß sein und befindet sich in einer Versorgungsleitung 50, in welcher sich eine vierte Pumpe 52 befindet und welche einen Vorratsbehälter 54, welcher den flüchtigen Bestandteil enthält, mit einer Einlaßöffnung 56 in der Deckenwand 4 des Meßbehälters 6 strömungsmäßig verbindet. Dadurch wird in Abhängigkeit von der Eintauchtiefe des Schwimmkörpers 34 in das Flüssigkeitsgemisch 8 im Meßbehälter 6 flüchtiger Bestandteil aus dem Vorratsbehälter 54 in der Weise von der vierten Pumpe 52 in den Meßbehälter 6 gefördert, daß der Istwert an flüchtigem Bestandteil im Meßbehälter 6 im wesentlichen dem gewünschten Sollwert entspricht. Falls die vierte Pumpe 52 dauernd betrieben werden soll, auch wenn das Ventil 48 geschlossen ist, kann eine Rücklaufleitung 60 mit einer Drossel 62 vorgesehen werden, über welche der von der vierten Pumpe 52 bei geschlossenem Ventil 48 geförderte flüchtige Bestandteil in den Vorratsbehälter 54 zurückfließen kann.

Zusätzlich zur oder anstatt der mechanisch-optischen Meßwertskala 41 des Meßgerätes 38 kann ein vom Computer 44 mit Istwert-Signalen beliefertes Istwert-Anzeigegerät 64 vorgesehen sein.

Der Überlauf 37 ist durch ein vertikal angeordnetes Rohr 66 gebildet, welches verschiebbar, jedoch flüssigkeitsdicht durch den Boden 67 des Meßbehälters 6 hindurchgeführt ist und mit Höheneinstellmitteln 68 in der Höhe verstellt werden kann. Die Höheneinstellmittel 68 bestehen beispielsweise aus einer am Überlaufrohr 66 befestigten Gewindespindel 70, welche durch die Deckenwand 72 des Meßbehälters 6 vertikal hindurchgeführt ist und an einer auf sie geschraubten Stellmutter 74 hängt. Die Gewindespindel 70 kann als Hohlwelle ausgebildet sein und dadurch gleichzeitig als Entlüftungsrohr für den Meßbehälter 6 dienen, wenn die Gewindespindel entsprechend der Zeichnung innerhalb des Meßbehälters 6 mit einer Entlüftungsöffnung 76 versehen wird.

Durch Einstellen der Höhe des Überlaufes 37 relativ zum Meßbehälter 6 wird das Flüssigkeitsniveau 80 im Meßbehälter 6 und damit die Höhe des Schwimmkörpers 34 relativ zum Meßgerät 38 auf einen Bezugswert eingestellt, nachdem das Flüssigkeitsgemisch zusätzlich zum Grundbestandteil Wasser alle Zusatzstoffe erhalten hat, mit Ausnahme des flüchtigen Bestandteils, dessen prozentualer Anteil im Flüssigkeitsgemisch gemessen und geregelt werden soll. Der Bezugswert ist vorzugsweise der Skalenwert "0" der Meßwertskala 41 oder des Anzeigegerätes 64. Die Temperatur des Flüssigkeitsgemisches 8 und die Temperaturen der Geräteteile bestimmen wesentlich ihre Dichte und damit auch den Anzeigewert des Meßgerätes 38. Damit das Meßgerät 38 auch bei Erreichen der Betriebstemperatur noch den gewünschten Bezugswert anzeigt, erfolgt die Eichung oder Einstellung des Meßgerätes 38 auf den Bezugswert "0" oder einen anderen gewünschten Bezugswert vorzugsweise erst dann, wenn das Flüssigkeitsgemisch 8 im Meßbehälter 6 die Betriebstemperatur hat. Die Temperatur des Flüssigkeitsgemischs 8 im Meßbehälter 6 wird von einem Temperatursensor 81 gemessen und optisch angezeigt. Nach Erreichen der Betriebstemperatur und anschließender Einstellung des Schwimmkörpers 34 durch Höhenverstellung des Überlaufes 37 auf den Bezugswert, beispielsweise "0", wird soviel flüchtiger Bestandteil oder Alkohol aus dem Vorratsbehälter 54 mittels der vierten Pumpe 52 bei geöffnetem Ventil 48 in den Meßbehälter 6 gefördert, bis die Meßskala oder das Meßgerät 64 den Sollwert für den prozentualen Anteil des flüchtigen Bestandteils anzeigt. Die erstmalige Hinzufügung dieses Anteils an flüchtigem Bestandteil kann von Hand oder durch Einschalten des Meßgerätes 38 vorgenommen werden. Beim Einschalten des Meßgerätes 38 erzeugt sein Computer 44, vorzugsweise ein Mikrocomputer, automatisch auf der elektrischen Signalleitung 47 ein elektrisches Stellsignal am Ventil 48, durch welches das Ventil 48 solange geöffnet bleibt, bis das Meßgerät 38 einen Istwert mißt, welcher dem Sollwert entspricht.

Das Meßgerät 38 bildet zusammen mit dem Schwimmkörper 34 und dem Ventil 48 eine Regeleinrichtung, welche in Abhängigkeit von dem Istwert-Signal und dem vorgegebenen Sollwert die Zufuhr des flüchtigen Bestandteils aus dem Vorratsbehälter 54 in den Meßbehälter 6 automatisch regelt. Gemäß einer abgewandelten Ausführungsform kann der flüchtige Bestandteil aus dem Vorratsbehälter 54 in den Aufbereitungsbehälter 2 gefördert werden, anstatt in den Meßbehälter 6. Im Aufbereitungsbehälter 2 vermischt sich der flüchtige Bestandteil automatisch mit dem bereits vorhandenen Flüssigkeitsgemisch und gelangt dann mit diesem durch den zweiten Flüssigkeitskreislauf 32 in den Meßbehälter 6.

Die in Fig. 1 dargestellte Vorrichtung kann dazu benutzt werden, den Gesamtgehalt des flüchtigen Bestandteils zu messen und zu regeln, in welchem Falle sie vor Hinzufügen des flüchtigen Bestandteils in das Flüssigkeitsgemisch auf den Bezugswert eingestellt wird; oder einen Anteil des flüchtigen Bestandteils zu messen und zu regeln, welcher nach dem Einstellen der Vorrichtung auf den Bezugswert dem Flüssigkeitsgemisch zusätzlich zu einer bereits darin enthaltenen Menge des flüchtigen Bestandteils hinzugefügt wird.

## Patentansprüche

1. Vorrichtung zur Messung und Konstanthaltung des prozentualen Anteils eines flüchtigen Bestandteils eines Flüssigkeitsgemisches, insbesondere von Alkohol oder Alkoholersatzstoff in Feuchtwasser einer Offsetdruckmaschine, mit folgenden Merkmalen:
1.1 einem Behälter (6), der mit einem Zulauf (30) und einem Überlauf (37) versehen und in einem die Flüssigkeitsmischung (8) als Strömung führenden Flüssigkeitskreislauf (32) angeordnet ist,
1.2 einem im Flüssigkeitsgemisch (8) im Behälter (6) schwimmenden Schwimmkörper (34), welcher in Abhängigkeit von der Dichte des Flüssigkeitsgemisches (8) mehr oder weniger tief darin eintaucht,
1.3 einem Meßgerät (38), welches in Abhängigkeit von der Eintauchtiefe des Schwimmkörpers (34) ein Meßsignal erzeugt, welches einem bestimmten Wert der Dichte des Flüssigkeitsgemisches und damit einem bestimmten Wert des Anteils des flüchtigen Bestandteils (von 54) entspricht,
**dadurch gekennzeichnet,**
1.4 daß Höheneinstellmittel (68) zur Einstellung der Höhe des Überlaufes (37) relativ zum Behälter (6) vorgesehen sind,
1.5 daß durch Einstellung der Höhe des Überlaufes (37) das Flüssigkeitsniveau (8) im Behälter (6) und damit die Höhe des Schwimmkörpers (34) relativ zum Meßgerät (38) auf einen Bezugswert (z.B. Wert "0") des Meßgerätes (38) eingestellt wird und daß anschließend ausgehend von diesem Bezugswert der flüchtige Bestandteil oder ein Anteil des flüchtigen Bestandteils (von 54) dem Flüssigkeitsgemisch (8) derart hinzugefügt wird, daß der Istwert des flüchtigen Bestandteils oder seines hinzugefügten Anteils einem vorgegebenen Sollwert entspricht.

2. Vorrichtung nach Anspruch 1,
**dadurch gekennzeichnet,**
daß das Meßgerät (38) ein Teil einer Regeleinrichtung (34,38,48,54) ist, welche in Abhängigkeit von dem Istwertsignal und von einem vorgegebenen Sollwert die Zufuhr von Ergänzungen des flüchtigen Bestandteils (aus 54) in das Flüssigkeitsgemisch (8) regelt.

3. Vorrichtung nach Anspruch 1 oder 2,
**dadurch gekennzeichnet,**
daß ein Temperatursensor (81) zur Messung der Temperatur des Flüssigkeitsgemisches (8) mit einer optischen Temperaturanzeige vorgesehen ist, welche die Einstellung des Bezugswertes des Meßgerätes (38) bei einer bestimmten Betriebstemperatur des Flüssigkeitsgemisches (8) ermöglicht.

4. Verfahren zur Messung und Konstanthaltung des prozentualen Anteils eines flüchtigen Bestandteils eines Flüssigkeitsgemisches (8), insbesondere von Alkohol oder Alkoholersatzstoff in Feuchtwasser einer Offsetdruckmaschine, wobei ein Behälter (6) benutzt wird, der mit einem Zulauf (30) und einem Überlauf (37) versehen und in einem die Flüssigkeitsmischung (8) als Strömung führenden Flüssigkeitskreislauf angeordnet ist, und wobei sich im Flüssigkeitsgemisch (8) im Behälter (6) ein Schwimmkörper (34) befindet, welcher in Abhängigkeit von seiner Eintauchtiefe ein Meßsignal in einem Meßgerät (38) erzeugt,
**gekennzeichnet durch**
folgende Schritte:
Einstellen der Höhe des Überlaufes (37) relativ zum Behälter (6) und dabei relativ zum Meßgerät (38) auf einen Bezugswert des Meßgerätes, beispielsweise auf einen Istwert-Anzeigewert von "0", und Hinzufügen des flüchtigen Bestandteils (aus 54) in das Flüssigkeitsgemisch (8) unter ständigem Vergleich von Istwert und Sollwert derart, daß der Istwert mindestens ungefähr dem Sollwert entspricht.

5. Verfahren nach Anspruch 4,
**dadurch gekennzeichnet,**
daß die Einstellung der Höhe des Überlaufes (37) in Abhängigkeit von der Temperatur des Flüssigkeitsgemisches dann vorgenommen wird, wenn das Flüssigkeitsgemisch seine Betriebstemperatur erreicht hat.

## Claims

1. Device for measuring and keeping constant the percentage of a volatile component of a liquid mixture, in particular of alcohol or an alcohol substitute in a fountain solution of an offset printing machine, having the following features:
1.1 a vessel (6), which is provided with an inlet (30) and an overflow (37) and is disposed in a liquid circuit (32) carrying the liquid mixture (8) as a flow,
1.2 a float (34), which floats in the liquid mixture (8) in the vessel (6) and in dependence upon the density of the liquid mixture (8) is immersed to a greater or lesser depth therein,
1.3 a measuring instrument (38) which, in dependence upon the depth of immersion of the float (34), produces a measuring signal corresponding to a specific value of the density of the liquid mixture and hence to a specific value of the proportion of the volatile component (from 54),
characterized in
1.4 that height adjustment means (68) are provided for adjusting the height of the overflow (37) relative to the vessel (6),
1.5 that through adjustment of the height of the overflow (37) the liquid level (8) in the vessel (6) and hence the height of the float (34) relative to the measuring instrument (38) is set to a reference value (e.g. value "0") of the measuring instrument (38) and that, starting from said reference value, the volatile component or a proportion of the volatile component (from 54) is then added to the liquid mixture (8) in such a way that the actual value of the volatile component or of its added proportion corresponds to an entered setpoint value.

2. Device according to claim 1,
characterized in
that the measuring instrument (38) is part of a regulating device (34, 38, 48, 54) which, in dependence upon the actual-value signal and an entered setpoint value, regulates the supply of additional amounts of the volatile component (from 54) into the liquid mixture (8).

3. Device according to claim 1 or 2,
characterized in
that a temperature sensor (81) for measuring the temperature of the liquid mixture (8) is provided with a visual temperature display which, given a specific operating temperature of the liquid mixture (8), enables the setting of the reference value of the measuring instrument (38).

4. Method of measuring and keeping constant the percentage of a volatile component of a liquid mixture (8), in particular of alcohol or an alcohol substitute in the fountain solution of an offset printing machine, wherein a vessel (6) is utilized, which is provided with an inlet (30) and an overflow (37) and is disposed in a liquid circuit carrying the liquid mixture (8) as a flow, and wherein situated in the liquid mixture (8) in the vessel (6) is a float (34) which, in dependence upon its depth of immersion, produces a measuring signal in a measuring instrument (38),
characterized by the following steps:
setting the height of the overflow (37) relative to the vessel (6) and hence relative to the measuring instrument (38) to a reference value of the measuring instrument, e.g. to an actual-value display value of "0", and adding the volatile component (from 54) to the liquid mixture (8) while constantly comparing actual value and setpoint value in such a way that the actual value corresponds at least approximately to the setpoint value.

5. Method according to claim 4,
characterized in
that the setting of the height of the overflow (37) in dependence upon the temperature of the liquid mixture is effected when the liquid mixture has reached its operating temperature.

## Revendications

1. Dispositif pour mesurer et stabiliser la part en pourcentage d'un composant volatile d'un mélange liquide, notamment d'alcool ou de substitut d'alcool dans la solution de mouillage d'une machine d'impression offset, présentant les caractéristiques suivantes :
1.1 un récipient (6), qui est pourvu d'une admission (30) et d'un trop-plein (37) et qui est disposé dans un circuit de liquide (32) dans lequel circule le mélange liquide (8),
1.2 un flotteur (34), qui flotte dans le mélange liquide (8) dans le récipient (6) et s'immerge plus ou moins profondément dans le mélange liquide (8) en fonction de la densité de ce dernier,
1.3 un appareil de mesure (38) qui produit, en fonction de la profondeur d'immersion du flotteur (34), un signal de mesure correspondant à une valeur déterminée de la densité du mélange liquide, et donc à une valeur déterminée de la part de composant volatile (provenant de 54),
**caractérisé**
1.4 en ce que des moyens (68) de réglage en hauteur sont prévus pour régler la hauteur du trop-plein (37) par rapport au récipient (6),
1.5 en ce que, pour régler la hauteur du trop-plein (37), le niveau de liquide (80) dans le récipient (6), et donc la hauteur du flotteur (34) par rapport à l'appareil de mesure (38), est réglé à une valeur de référence (valeur « 0 » par exemple) de l'appareil de mesure (38), et en ce qu'ensuite, en partant de cette valeur de référence, le composant volatile ou une part de composant volatile (en provenance de 54) est ajouté au mélange liquide (8) de façon que la valeur réelle du composant volatile ou de sa part ajoutée corresponde à une valeur de consigne prédéfinie.

2. Dispositif selon la revendication 1, **caractérisé** en ce que l'appareil de mesure (38) fait partie d'un équipement de régulation (34, 38, 48, 54) qui, en fonction du signal de valeur réelle et d'une valeur de consigne prédéfinie, régule l'apport de compléments du composant volatile (en provenance de 54) dans le mélange liquide (8).

3. Dispositif selon la revendication 1 ou 2, **caractérisé** en ce qu'un capteur de température (81) est prévu pour mesurer la température du mélange liquide (8), et est doté d'une indication visuelle de température qui permet de régler la valeur de référence de l'appareil de mesure (38) pour une température donnée de service du mélange liquide (8).

4. Procédé pour mesurer et stabiliser la part en pourcentage d'un composant volatile d'un mélange liquide (8), notamment d'alcool ou de substitut d'alcool dans la solution de mouillage d'une machine d'impression offset, un récipient (6) étant utilisé, qui est pourvu d'une admission (30) et d'un trop-plein (37) et qui est disposé dans un circuit de liquide dans lequel circule le mélange liquide (8), et un flotteur (34) se trouvant dans le mélange liquide (8) dans le récipient (6) et produisant, en fonction de sa profondeur d'immersion, un signal de mesure dans un appareil de mesure (38),
**caractérisé** par les étapes suivantes :
réglage de la hauteur du trop-plein (37) par rapport au récipient (6), et pour cela par rapport à l'appareil de mesure (38), à une valeur de référence de l'appareil de mesure, par exemple à une valeur indiquée de valeur réelle égale à « 0 », et ajout du composant volatile (à partir de 54) dans le mélange liquide (8) en comparant constamment la valeur réelle et la valeur de consigne de façon que la valeur réelle corresponde au moins approximativement à la valeur de consigne.

5. Procédé selon la revendication 4, **caractérisé** en ce que le réglage de la hauteur du trop-plein (37) est entrepris en fonction de la température du mélange liquide, une fois que le mélange liquide a atteint sa température de service.
